# EUROPEAN PATENT APPLICATION

(11) **EP 3 531 263 A1**
(43) Date of publication of application: **28.08.2019**
(21) Application number: 19161808.1
(22) Date of filing: 17.02.2016
(51) Int. Cl.: G06F 3/0488, G06F 3/16, G06F 3/0482, G06F 17/24, G06F 3/0484

(54) **GESTURE INPUT PROCESSING METHOD AND ELECTRONIC DEVICE SUPPORTING THE SAME**

(30) Priority: 17.02.2015 KR 20150024529
(62) Divisional of application: 16156147.7
(71) Applicant: Samsung Electronics Co., Ltd., Suwon-si, Gyeonggi-do, 16677 (KR)
(72) Inventor: Lee, Jae Wook, 16697 Suwon-si (KR); Kang, Dong Heon, 16695 Suwon-si (KR); Cho, An Ki, 16689 Suwon-si (KR); Li, Shao Yu, 06732 Seoul (KR); Lim, Young Seok, 16547 Suwon-si (KR)
(74) Representative: Nederlandsch Octrooibureau

(57) **Abstract**

An electronic device is provided. The electronic device includes a memory configured to store an application, a processor configured to execute the application and to control a editable state of at least one of contents related to the application, and a sensor configured to sense at least one gesture input related to editing contents in the editable state, and the processor performs a editing function corresponding to the gesture input.

## Description

### PRIORITY

This application claims priority to Korean Patent Application No. 10-2015-0024529, filed February 17, 2015, the content of which is incorporated herein by reference.

### BACKGROUND OF THE INVENTION

### 1. Field of the Invention

The present disclosure relates to a method for processing a gesture input about contents in the electronic device.

### 2. Background of the Invention

The electronic device may provide an input interface in a number of ways. For example, the electronic device receives a touch input by contact or proximity to the touch object, the user's voice input, or the like. Furthermore, the electronic device provides an input interface based on a gesture input. For example, the electronic device senses a user motion to the electronic device or a movement of the electronic device and performs a function corresponding to the sensed result.

The electronic device provides an input interface which is based on the above-mentioned gesture input, thereby solving a problem due to a touch input or a voice input. For example, in the case where an accurate touch input is impossible in a state (e.g., while driving) where a user is unable to watch a screen or an accurate voice recognition is impossible due to an ambient noise, the electronic device is able to perform a required function through a gesture input.

However, to edit contents related to an application through a gesture input, a conventional electronic device has to receive a gesture input through several steps: displaying a menu about an editing function, selecting a specific editing function from the displayed menu, and the like. Furthermore, an area in which a gesture input for editing contents is received may be limited in a conventional electronic device. As such, when editing contents using a gesture input, the conventional electronic device is problematic in that the utilization of a gesture input is lowered due to the complex procedure and the difficulty in manipulation.

### SUMMARY OF THE INVENTION

Aspects of the present disclosure are to address at least the above-mentioned problems and/or disadvantages and to provide at least the advantages described below. Accordingly, an aspect of the present disclosure is to provide a user input processing method which performs processing such that an editing function with the complex procedure and configuration is executed in response to a gesture input when contents are edited based on a gesture input and an electronic device supporting the same.

Furthermore, another aspect of the present disclosure is to provide a gesture input processing method which expands an area for sensing a gesture input when contents are edited based on the gesture input and an electronic device supporting the same.

Furthermore, still another aspect of the present disclosure is to provide a gesture input processing method which feeds information associated with an editing function back to a user and an electronic device supporting the same.

In accordance with an aspect of the present disclosure, an electronic device may include a memory configured to store an application, a processor configured to execute the application and to control a editable state of at least one of contents related to the application, and a sensor configured to sense at least one or more gesture inputs related to editing contents in the editable state, and the processor may perform an editing function corresponding to the gesture input.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram schematically illustrating a configuration of an electronic device according to an embodiment of the present disclosure;
FIG. 2 is a flowchart illustrating an operating method of an electronic device associated with a gesture input processing method, according to various embodiments of the present disclosure;
FIG. 3 is a flowchart illustrating an operating method of an electronic device associated with a gesture input sensing and analyzing method, according to various embodiments of the present disclosure;
FIG. 4 illustrates a gesture mapping table according to various embodiments of the present disclosure;
FIG. 5A is a diagram illustrating a select all function while editing contents based on a gesture input, according to various embodiments of the present disclosure;
FIG. 5B is a diagram illustrating a cut function while editing contents based on a gesture input, according to various embodiments of the present disclosure;
FIG. 5C is a diagram illustrating a copy function while editing contents based on a gesture input, according to various embodiments of the present disclosure;
FIG. 5D is a diagram illustrating a copy function while editing contents based on a gesture input, according to various embodiments of the present disclosure;
FIG. 6A shows an example in which a gesture input test pad is used, according to various embodiments of the present disclosure; and
FIG. 6B shows an example in which a gesture input tutorial is used, according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

Various embodiments of the present disclosure may be described with reference to accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components may be marked by similar reference numerals.

In the disclosure disclosed herein, the expressions "have", "may have", "include" and "comprise", or "may include" and "may comprise" used herein indicate existence of corresponding features (e.g., elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms do not limit the order and/or priority of the elements. For example, "a first user device" and "a second user device" indicate different user devices. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used herein may be used as, for example, the expression "suitable for", "having the capacity to", "designed to", "adapted to", "made to", or "capable of'. The term "configured to" must not mean only "specifically designed to" in hardware. Instead, the expression "a device configured to" may mean that the device is "capable of' operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) which may perform corresponding operations by executing one or more software programs which are stored in a memory device.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. A wearable device according to various embodiments of the present disclosure may include at least one of an accessory type (e.g., watch, ring, bracelet, ankle bracelet, necklace, glasses, contact lens, or head-mounted-device(HMD)), a fabric or clothing type (e.g., electronic apparel), a physical attachment type (e.g., skin pad or tattoo), or a body implantation type (e.g., implantable circuit).

According to various embodiments of the present disclosure, the electronic devices may be home appliances. The home appliances may include at least one of, for example, televisions (TVs), digital versatile disc (DVD) players, audios, refrigerators, air conditioners, cleaners, ovens, microwave ovens, washing machines, air cleaners, set-top boxes, TV boxes (e.g., Samsung HomeSyncTM, Apple TVTM, or Google TVTM), game consoles (e.g., XboxTM and PlayStationTM), electronic dictionaries, electronic keys, camcorders, electronic picture frames, and the like.

According to various embodiments of the present disclosure, the electronic devices may include at least one of medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices) receiving a user input in an idle mode, navigation devices, global navigation satellite system (GNSS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to various embodiments of the present disclosure, the electronic devices may include at least one of parts of furniture or buildings/structures, electronic boards, electronic signature receiving devices, projectors, or various measuring instruments (e.g., water meters, electricity meters, gas meters, or wave meters, and the like). The electronic devices according to various embodiments of the present disclosure may be one or more combinations of the above-mentioned devices. According to various embodiments of the present disclosure, an electronic device may be a flexible electronic device. Also, electronic devices according to various embodiments of the present disclosure are not limited to the above-mentioned devices, and may include new electronic devices according to technology development.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

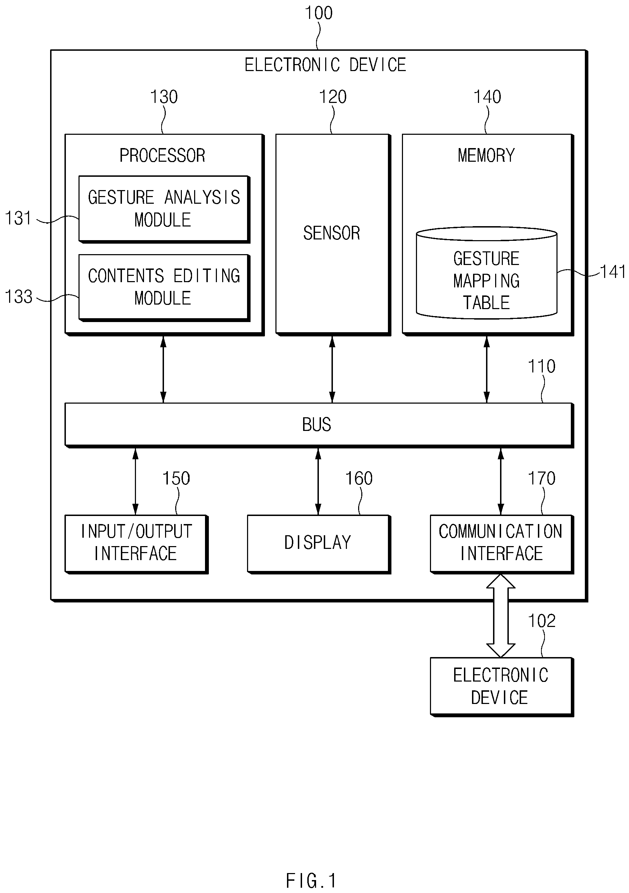

FIG. 1 is a block diagram schematically illustrating a configuration of an electronic device according to an embodiment of the present disclosure.

Referring to FIG. 1, the electronic device 100 may include a bus 110, a sensor 120, a processor 130, a memory 140, an input/output interface 150, a display 160, and a communication interface 170. According to an embodiment of the present disclosure, the electronic device 100 may not include at least one of the above-described components or may further include other component(s).

For example, the bus 110 may interconnect the sensor 120, the processor 130, the memory 140, the input/output interface 150, the display 160, and the communication interface 170 and may be a circuit for conveying communications (e.g., a control message and/or data) among the above-described components.

The sensor 120 may measure a physical quantity or may sense an operation state of the electronic device 100. The sensor 120 may convert the measured or sensed information to an electric signal. The electronic device 100 may include at least one or more sensors 120. The electronic device 100 may include, for example, at least one of a gesture sensor, a gyro sensor, a pressure sensor, a magnetic sensor, an acceleration sensor, a grip sensor, a proximity sensor, a color sensor (e.g., red, green, blue (RGB) sensor), a biometric sensor, a temperature/humidity sensor, an illuminance sensor, or an ultraviolet (UV) sensor. Additionally or alternatively, the electronic device 100 may include, for example, an e-nose sensor, an electromyography sensor, an electroencephalogram sensor, an electrocardiogram sensor, an infrared (IR) sensor, an iris sensor, and/or a fingerprint sensor. The electronic device 100 may further include a control circuit for controlling at least one or more sensors 120 included therein. According to an embodiment of the present disclosure, the electronic device 100 may further include a processor which is a portion of the processor 130 or independent of the processor 130 and is configured to control at least one or more sensors 120. The processor may control at least one or more sensors 120 when the processor 130 remains at a sleep state.

According to various embodiments of the present disclosure, the sensor 120 may sense a gesture input, for example, a user motion to the electronic device 100 or a movement of the electronic device 100. For example, if the electronic device 100 is set to a state where the gesture input is capable of being received (or obtained), the sensor 120 may receive (or obtain) a touch input corresponding to the contact or approach of a touch object, such as a portion of the user's body (e.g., a finger), an electronic pen, or the like, as the gesture input. Furthermore, in the state where the gesture input is received, the sensor 120 may sense an operation, such as a location, a direction, a rotation, or the like, of the electronic device 100 and may receive (or obtain) sensor information corresponding to the above-mentioned operations as the gesture input.

The processor 130 may include one or more of a central processing unit (CPU), an application processor (AP), or a communication processor (CP). For example, the processor 130 may perform an arithmetic operation or data processing associated with control and/or communication of at least one other component of the electronic device 100.

According to various embodiments of the present disclosure, the processor 130 may process a gesture input. For example, the processor 130 may analyze the sensed gesture input and may perform a function corresponding to the analyzed gesture input. In this regard, the processor 130 may include a gesture analysis module 131 and a contents editing module 133.

The gesture analysis module 131 may analyze the sensed gesture input. For example, the gesture analysis module 131 may analyze a type, a form, a frequency, a direction, or the like of the gesture input. In this regard, the type of the gesture input may be classified as a user motion input (a first type input) to the electronic device 100 or a movement input (a second type input) of the electronic device 100. The first type input may be an input corresponding to a motion using a portion of a user's body, an electronic pen, or the like. The form of the first type input may include a tap, a swipe, or the like to the display 160. The second type input may be an input corresponding to a movement, such as a location, a direction, a rotation, or the like of the electronic device 100.

The contents editing module 133 may perform a function, related to the editing of contents (e.g., a text, an image, a video, an icon, a symbol, or the like), from among functions corresponding to the gesture input. For example, the contents editing module 133 may perform a function of selecting at least a portion of the contents as an editing target and may perform a function of editing the selected editing target. The editing function may include a copy, a paste, a cut, or the like about the editing target.

The memory 140 may include a volatile and/or nonvolatile memory. For example, the memory 140 may store instructions or data associated with at least one other component(s) of the electronic device 100. According to an embodiment of the present disclosure, the memory 140 may store software and/or a program. The program may include, for example, a kernel, a middleware, an application programming interface (API), an application program (or an application), and/or the like. At least a portion of the kernel, the middleware, or the API may be called as an operating system (OS).

For example, the kernel may control or manage system resources (e.g., the bus 110, the processor 130, the memory 140, or the like) that are used to execute operations or functions of other programs (e.g., the middleware, the API, or the application program). Furthermore, the kernel may provide an interface that allows the middleware, the API, or the application program to access discrete components of the electronic device 100 so as to control or manage the system resources.

For example, the middleware may perform a mediation role such that the API or the application program communicates with the kernel to exchange data.

Furthermore, the middleware may process one or more job requests received from the application program according to a priority. For example, the middleware may assign the priority, which makes it possible to use a system resource (e.g., the bus 110, the processor 130, the memory 140, or the like) of the electronic device 100, to at least one of the application program. For example, the middleware may process one or more job requests based on the priority assigned to the at least one, thereby performing the scheduling or the load balancing about the one or more job requests.

The API may be an interface through which the application controls a function provided by the kernel or the middleware, and may include, for example, at least one interface or function (e.g., an instruction) for a file control, a window control, image processing, a character control, or the like.

According to various embodiments of the present disclosure, the memory 140 may store a gesture mapping table 141. The gesture mapping table 141 may be a group of data in which there are defined at least one gesture input supported by the electronic device 100 and at least one function corresponding to the gesture input. For example, the memory 140 may store the gesture mapping table 141, in which there are defined information (e.g., a type, a description, or the like of the function) related to at least one function (e.g., an editing function) specified (or mapped) according to information (e.g., a type, a form, a frequency, a direction, or the like of the gesture input) related to at least one gesture input.

The input/output interface 150 may transmit an instruction or data, input from a user or another external device, to other component(s) of the electronic device 100. Furthermore, the input/output interface 150 may output an instruction or data, received from other component(s) of the electronic device 100, to a user or another external device.

According to various embodiments of the present disclosure, the input/output interface 150 may include a voice output device, for example, a speaker. The input/output interface 150 may output a voice corresponding to information related to the corresponding function through the voice output device in performing the function corresponding to the gesture input. For example, if at least a portion of contents is selected as an editing target, the input/output interface 150 may output information about a type, content, or the like of the selected contents audibly, for example, by voice. Furthermore, the input/output interface 150 may output information about a type, a description, or the like of an editing function audibly, for example, by voice.

The display 160 may include, for example, a liquid crystal display (LCD), a light-emitting diode (LED) display, an organic LED (OLED) display, or a microelectromechanical systems (MEMS) display, or an electronic paper display. The display 160 may display, for example, various contents (e.g., a text, an image, a video, an icon, a symbol, or the like) to a user. The display 160 may include a touch screen and may receive, for example, a touch, gesture, proximity, or hovering input using an electronic pen or a portion of a user's body.

For example, the communication interface 170 may establish communication between the electronic device 100 and an external device (e.g., the electronic device 102). For example, the communication interface 170 may connect to a network through a wireless or wired communication so as to communicate with the external device (e.g., the electronic device 102).

The wireless communication may include at least one of, for example, a long-term evolution (LTE), an LTE Advance (LTE-A), a code division multiple access (CDMA), a wideband code division multiple access (WCDMA), a universal mobile telecommunications system (UMTS), a wireless broadband (WiBro), a global system for mobile communications (GSM), or the like, as a cellular communication protocol. Furthermore, the wireless communication may include, for example, a local area network. The local area network may include at least one of, for example, a wireless fidelity (Wi-Fi), a Bluetooth, a near field communication (NFC), a global navigation satellite system (GNSS), or the like. The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, "GPS" and "GNSS" may be used interchangeably in this disclosure. For example, the wired communication may include at least one of, for example, a universal serial bus (USB), a high definition multimedia interface (HDMI), a recommended standard-232 (RS-232), a plain old telephone service (POTS), or the like. For example, the network may include at least one of telecommunications networks, for example, a computer network (e.g., local area network (LAN) or wide area network (WAN)), an internet, or a telephone network.

An electronic device 102 may be a device of which the type is different from or the same as that of the electronic device 100. According to various embodiments of the present disclosure, all or a portion of the operations that the electronic device 100 performs may be executed by another or plural electronic devices 102. According to an embodiment of the present disclosure, in the case where the electronic device 100 executes any function or service automatically or in response to a request, the electronic device 100 may not perform the function or the service internally, but, alternatively additionally, it may request at least a portion of a function associated with the electronic device 100 from other device (e.g., the electronic device 102). The other electronic device (e.g., the electronic device 102) may execute the requested function or additional function and may transmit the execution result to the electronic device 100. The electronic device 100 may provide the requested function or service using the received result or may additionally process the received result to provide the requested function or service.

According to various embodiments of the present disclosure, the electronic device 102 may include at least one sensor which senses a gesture input. Accordingly, the electronic device 102 may sense the gesture input and may provide the sensed information to the electronic device 100. In this case, the electronic device 100 may not include the sensor 120. The electronic device 100 may analyze the gesture input sensed from the electronic device 102 and may perform a function corresponding to the analysis result.

As described above, according to various embodiments of the present disclosure, an electronic device 100 may include a memory configured to store an application, a processor configured to execute the application and to control a editable state of at least one of contents related to the application, and a sensor configured to sense at least one gesture input related to editing contents in the editable state, and the processor may perform an editing function corresponding to the gesture input.

According to various embodiments of the present disclosure, an electronic device may include a memory configured to store an application, a processor configured to execute the application and to control an editable state at least one of contents related to the application, and a touch screen display configured to sense at least one gesture input related to editing of the contents. The processor may be configured to enter the editable state corresponding to a first gesture input if the first gesture input is obtained in a partial area of the display, to expand an input area for a second gesture input, which is mapped to select at least one type among types of editing function, to an area of the display on which a gesture input is acceptable, and to perform an editing function corresponding to the second gesture input if the second gesture input is obtained on an area on which the gesture input is acceptable.

According to various embodiments of the present disclosure, the memory may store information related to the gesture input which is mapped on information related to the editing function.

According to various embodiments of the present disclosure, the contents may include at least one of a text, an image, or an attached file.

According to various embodiments of the present disclosure, the sensor may be included in an external electronic device which is connected with the electronic device through a communication interface.

According to various embodiments of the present disclosure, the processor may obtain the gesture input from an external electronic device which is connected to the electronic device through a communication interface.

According to various embodiments of the present disclosure, the processor may display information related to the editing function on an area of the display or may output the information related to the editing function through a voice output device.

According to various embodiments of the present disclosure, the processor may display an object on an area of the display or may output voice information corresponding to the object through a voice output device, the object guiding a gesture input corresponding to a related function such that the related function of the editing function is performed at a point in time when the performance of the editing function is completed or in a time interval.

According to various embodiments of the present disclosure, the processor may select at least a portion of the contents as an editing target corresponding to the second gesture input and may perform a cut function, a copy function, or a paste function with respect to the editing target corresponding to a third gesture input.

According to various embodiments of the present disclosure, if the second gesture input is obtained in a state where an input which explicitly indicates an end of the editable state is not obtained, the processor may control so as not to end the editable state until the third gesture input is obtained.

According to various embodiments of the present disclosure, if a gesture input is obtained or an item is selected on an information configuration screen related to the gesture input, the processor may execute a program which supports to practice a gesture corresponding to the gesture input.

According to various embodiments of the present disclosure, if a gesture input is obtained or an item is selected on an information configuration screen related to the gesture input, the processor may execute a program which supports to explain at least one of information or a gesture corresponding to the gesture input which is supportable.

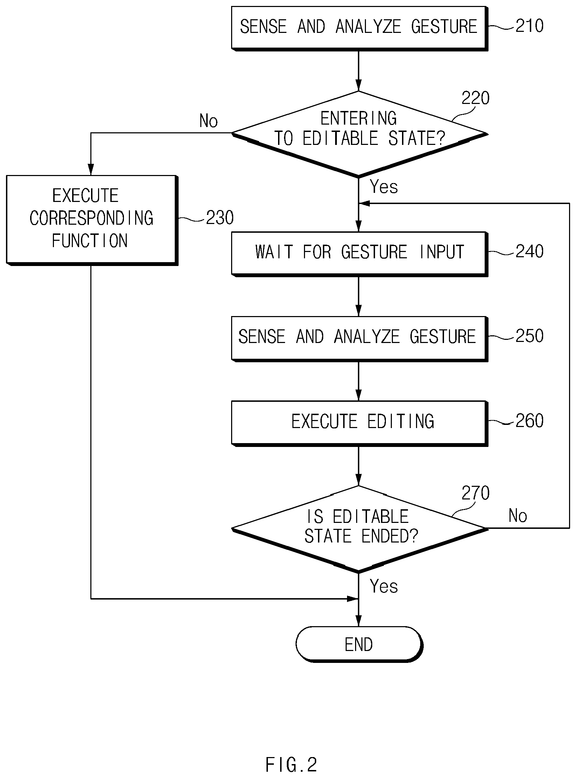

FIG. 2 is a flowchart illustrating an operating method of an electronic device associated with a gesture input processing method, according to various embodiments of the present disclosure.

Referring to FIG. 2, in operation 210, the electronic device 100 may sense and analyze a gesture input. For example, the electronic device 100 may analyze a gesture input sensed from the sensor 120 or a sensor included in the electronic device 102 which is connected to the electronic device 100 through the communication interface 170.

In operation 220, the electronic device 100 may determine whether a function corresponding to the analyzed gesture input is a function which indicates to enter an editable state related to an application. If the function does not indicate to enter the editable state, in operation 230, the electronic device 100 may process a function which is not related to contents editing in response to the gesture input. In this regard, the function which is not related to the contents editing may include, for example, search, selection, execution, or the like of any object (e.g., an icon, a list item, or the like). For example, the electronic device 100 may sequentially search for application icons arranged on a home screen through a general or specific gesture input (e.g., a gesture (e.g., one finger swipe) in which one finger moves to a specific or predetermined direction in a state where the one finger contacts on a gesture input sensing area). In this case, the electronic device 100 may output voice information, for example, a name of an icon, corresponding to an icon of an application to be searched. Furthermore, the electronic device 100 may select a specific or predetermined icon with a general, specific, or predetermined gesture input (e.g., a gesture (e.g., one finger double tap) in which one finger contacts on the gesture input sensing area for a specific time and then releases from the sensing area is performed twice in a specific time interval) and may execute an application corresponding to the icon.

If the function determined in operation 220 is a function which indicates to enter an editable state, in operation 240, the electronic device 100 may wait to receive a gesture input which indicates an editing function. According to various embodiments of the present disclosure, the electronic device 100 may expand an area, that is, the gesture input sensing area (or an input area), into an entire area on which the sensor 120 is capable of recognizing. The area may be an area for receiving a gesture input (e.g., a gesture input which is mapped to select at least one of types of editing function) which indicates an editing function in entering the editable state. For example, the electronic device 100 may expand the gesture input sensing area into a large portion or the entire area of a touch screen (or an area on which the gesture input is acceptable on the touch screen). Furthermore, the electronic device 100 may sense the gesture input based on the sensor included in the electronic device 102 which is connected through the communication interface 170.

In operation 250, the electronic device 100 may sense and analyze a gesture input. In operation 260, the electronic device 100 may perform an editing function corresponding to the gesture input. In this regard, the editing function may include a function of selecting at least a portion of contents as an editing target and a function of editing the editing target.

In operation 270, the electronic device 100 may determine an end of the editable state. For example, in the case where the editing function is the function of selecting the editing target, the electronic device 100 may wait to receive a gesture input corresponding to the function of editing the editing target as far as the editable state is not ended. In the case where the editing function is a function of editing the editing target or an input which indicates the end of the editable state is received, the electronic device 100 may end the editable state. In this case, the electronic device 100 may return to operation 210 and may sense and analyze another gesture input. According to an embodiment of the present disclosure, in the case where the input which indicates the end of the editable state is not received even though the editing function is a function of editing the editing target, the electronic device 100 may not end the editable state. Thus, the electronic device 100 may not include an operation, which receives an additional gesture input to enter the editable state.

According to various embodiments of the present disclosure, the electronic device 100 may associate a different function with a general, specific or predetermined gesture input, based on a state of the electronic device 100 or an application at a point in time when a general, specific or predetermined gesture input occurs. According to an embodiment of the present disclosure, the electronic device 100 may enter or end the editable state with the same gesture input. For example, the electronic device 100 enters the editable state through the general, specific or predetermined gesture input; if the same gesture input occurs in the editable state, the gesture input occurred later may be processed to perform a function of ending the editable state.

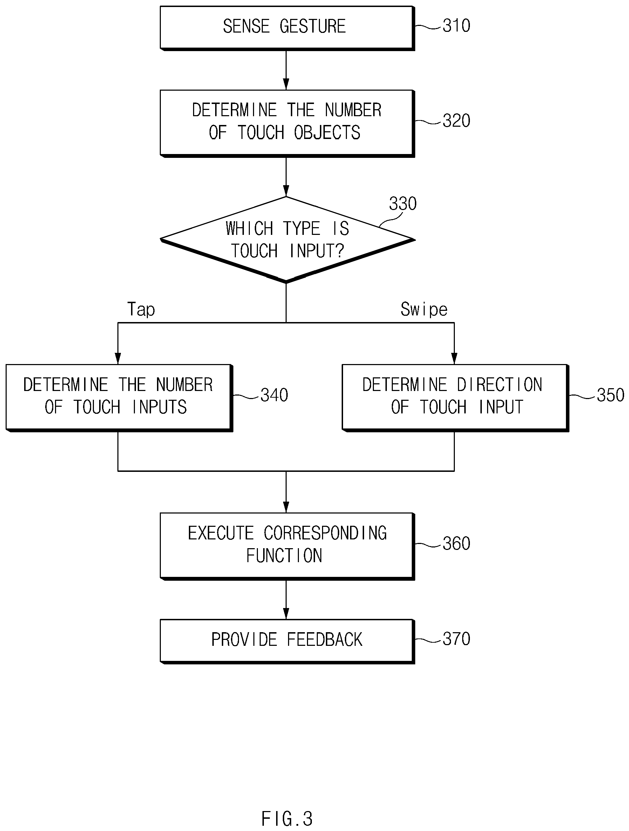

FIG. 3 is a flowchart illustrating an operating method of an electronic device (e.g., the electronic device 100 of FIG. 1) associated with a gesture input sensing and analyzing method, according to various embodiments of the present disclosure. In FIG. 3, an embodiment of the present disclosure is exemplified as a touch method is one of gesture input recognizing methods which recognize a user motion to the electronic device 100 as a gesture input.

Referring to FIG. 3, in operation 310, the electronic device 100 may sense a gesture input. For example, the electronic device 100 may sense a gesture of a touch object, such as a portion of a user's body, an electronic pen, or the like, using the sensor 120. If a gesture input is sensed, the electronic device 100 may analyze the sensed gesture input. For example, the electronic device 100 may analyze touch information corresponding to a gesture of the touch object. In this case, the electronic device 100 may refer to the gesture mapping table 141 (of FIG. 1) stored in the memory 140.

In operation 320, the electronic device 100 may determine a number of the touch objects that occur at substantially the same time. For example, the electronic device 100 may determine whether a touch input is a single touch or a multi-touch and may determine the number of touch points in the case of the multi-touch.

In operation 330, the electronic device 100 may determine a form of the touch input. For example, the electronic device 100 may determine the touch input as a tap input if the touch object is contacted on an area for a time and then is released therefrom. Furthermore, the electronic device 100 may determine the touch input as a swipe input if the touch object moves in a specific or predetermined direction with the touch object contacted on an area. According to an embodiment of the present disclosure, the electronic device 100 may sample the touch input in a time interval and may determine a form of the touch input based on a location (coordinates), a moving direction, a moving distance, or the like of the sampled touch input.

In the case where the touch input is a tap input, in operation 340, the electronic device 100 may determine the touch input frequency. For example, the electronic device 100 may determine the number of tap inputs inputted during a time.

In the case where the touch input is a swipe input, in operation 350, the electronic device 100 may determine a direction of the touch input. For example, the electronic device 100 may determine the direction of the swipe input.

In the case where the touch input frequency or the direction of the touch input is determined, in operation 360, the electronic device 100 may perform a function corresponding to the touch input. According to an embodiment of the present disclosure, the electronic device may determine a function corresponding to the touch input based on the gesture mapping table 141.

According to various embodiments of the present disclosure, in operation 370, the electronic device 100 may provide a feedback about the gesture input to a user. For example, the electronic device 100 may display information, such as a type, a form, a frequency, a direction, or the like of a touch input, on the display 160 or may output the information audibly, for example, by voice through the input/output interface 150. According to an embodiment of the present disclosure, the electronic device 100 may output information corresponding to a type, a description, or the like of a function with regard to the performance of the corresponding function. For example, if at least a portion of contents is selected as an editing target with regard to an editing function, the electronic device 100 may display information, such as a type, a name, content, or the like of the selected contents, on the display 160 or may output the information audibly, for example, by voice through the input/output interface 150.

In addition to the forms of the touch input described above, forms of the touch input may include a hold (or press), a pan, a drag, a flick, a pinch out/in, a rotate, or the like. Furthermore, an embodiment of the present disclosure is exemplified as a touch method is a gesture input recognizing method. However, the scope and spirit of the present disclosure may not be limited thereto. For example, the method may include a motion method, a vision method, or the like. The motion method may be a method in which an operation of a motion object is recognized by outputting a light to the motion object and measuring strength of the light reflected or refracted based on a light emitting diode (LED) and a photodiode. The vision method may be a method in which an operation of an object is recognized by capturing the object and processing the captured image based on a camera module (not shown).

According to an embodiment of the present disclosure, both a user motion to the electronic device 100 and a movement of the electronic device 100 may be recognized as a gesture input. For example, a change in a location or an angle of the electronic device 100 may be sensed, and a function corresponding to the sensed change may be performed.

As described above, according to various embodiments of the present disclosure, a method for processing a gesture input related to contents editing of the electronic device may include sensing at least one gesture input related to the contents editing and performing an editing function corresponding to the gesture input.

According to various embodiments of the present disclosure, a method for processing a gesture input may include obtaining a first gesture input related to the contents editing through a touch screen display included in the electronic device, entering an editable state corresponding to the first gesture input, expanding an input area for a second gesture input, which is mapped to select at least one type among types of editing function to an area of the display on which a gesture input is acceptable, obtaining the second gesture input on an area on which the gesture input is acceptable, and performing an editing function corresponding to the second gesture input.

According to various embodiments of the present disclosure, the method for processing the gesture input may further include storing information related to the gesture input which is mapped on information related to the editing function.

According to various embodiments of the present disclosure, the sensing of the gesture input may include sensing through a sensor included in an external electronic device which is connected with the electronic device through a communication interface.

According to various embodiments of the present disclosure, at least one of the obtaining of the first gesture input or the obtaining of the second gesture input may include obtaining the gesture input from an external electronic device connected to the electronic device through a communication interface.

According to various embodiments of the present disclosure, the performing of the editing function may further include at least one of displaying information related to the editing function on a specific area of the display and outputting the information related to the editing function through a voice output device.

According to various embodiments of the present disclosure, the performing of the editing function may further include at least one of displaying an object on an area of the display and outputting voice information corresponding to the object through a voice output device, the object guiding a gesture input corresponding to a related function such that the related function of the editing function is performed in completing the performance of the editing function or in a time interval.

According to various embodiments of the present disclosure, the performing of the editing function may include selecting at least a portion of the contents as an editing target corresponding to the second gesture input and performing a function, such as a cut function, a copy function, or a paste function about the editing target corresponding to a third gesture input.

According to various embodiments of the present disclosure, the selecting of the at least a portion may further include performing control so as not to end the editable state until the third gesture input is obtained, if the second gesture input is obtained in a state where an input which indicates an end of the contents editable state is not obtained.

According to various embodiments of the present disclosure, the method for processing the gesture input may further include executing a program, which supports to practice a gesture corresponding to the gesture input, if a specific gesture input is obtained or an item is selected on an information configuration screen related to the gesture input.

According to various embodiments of the present disclosure, the method for processing the gesture input may further include executing a program, which supports to explain at least one of information or a gesture corresponding to the gesture input which is supportable, if a gesture input is obtained or an item is selected on an information configuration screen related to the gesture input.

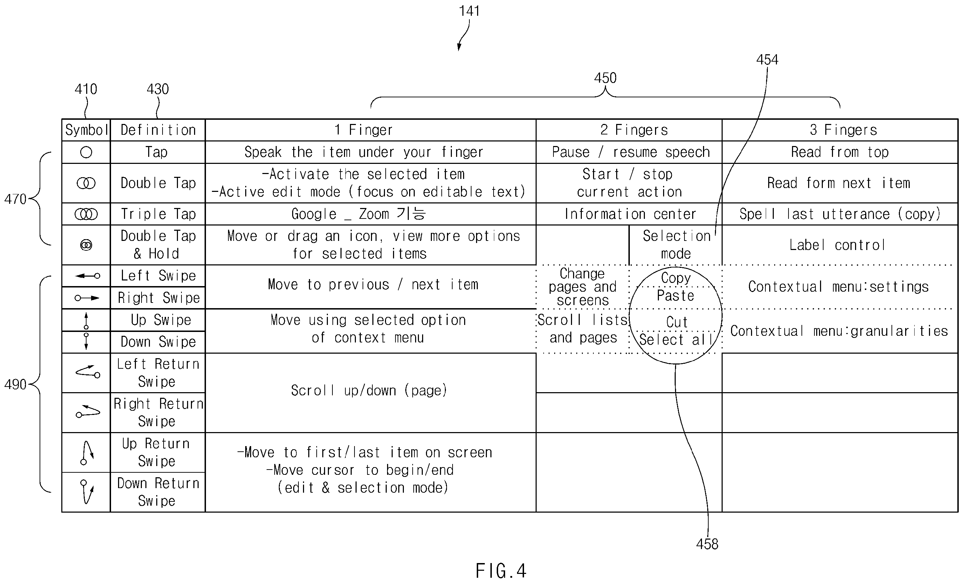

FIG. 4 illustrates a gesture mapping table according to various embodiments of the present disclosure. The electronic device 100 may perform a specific function corresponding to a gesture input.

Referring to FIG. 4, the electronic device 100 may refer to the gesture mapping table 141 (of FIG. 1) in which functions are defined to correspond to the gesture inputs. According to an embodiment of the present disclosure, the electronic device may store the gesture mapping table 141 in the memory 140.

The gesture mapping table 141 may include information, such as a type, a form, a frequency, a direction, or the like of at least one gesture input and information about at least one function, which is mapped (or specified) to each of the information. For example, the gesture mapping table 141 may include a symbol 410, which indicates information, such as a type, a form, a frequency, a direction, or the like of the gesture input, a definition 430 of a symbol, and the number of touch objects 450 as classification items. The symbol 410 may be an item for classifying a gesture input and in some embodiments may be divided into information such as a type, a form, a frequency, a direction, or the like of the gesture input. For example, the gesture mapping table 141 may classify the symbol 410 into a tap input 470 and a swipe input 490 based on the form of touch inputs. Furthermore, the symbol 410 may include an identifier about the gesture input, for example, a numeral, a character, a symbol, or the like specified to correspond to each of the gesture inputs. In the illustrated diagram, the symbol 410 which is specified to correspond to each of the gesture inputs is stored in the gesture mapping table 141. Furthermore, the definition 430 which is a definition about each of the gesture inputs may be referred and used at a point in time when the feedback about the gesture input is provided to a user. For example, if the gesture input is sensed, the electronic device 100 may analyze the gesture input and may determine whether the gesture input is a supportable input (e.g., whether the corresponding gesture input is defined in the gesture mapping table 141) through the gesture mapping table 141. In the case where the corresponding gesture input is the supported input (e.g., in the case where the corresponding gesture input is defined in the gesture mapping table 141), the electronic device 100 may perform a function corresponding to the corresponding gesture input based on an identifier of the gesture input, that is, the symbol 410. In this case, the electronic device 100 may display an object (e.g., a text, an image, a voice, or the like), which is stored as the definition 430, on a screen or may output the object audibly, for example, by voice based on the characteristics of the object.

According to an embodiment of the present disclosure, if the gesture input is sensed, the electronic device 100 may process entering to an editable state. For example, as illustrated, if a gesture (e.g., two fingers double tap & hold) in which two fingers contact on a gesture input sensing area more than a time is performed, the electronic device 100 may process to enter an editable state (e.g., selection mode 454). Furthermore, in the case where the gesture input is sensed in the editable state, the electronic device 100 may perform an editing function. For example, as illustrated, if a gesture (e.g., two fingers swipe) in which two fingers move to a specific direction in a state where the two fingers contact on a gesture input sensing area is performed in the editable state, the electronic device 100 may perform a function 458, such as a copy, a paste, a cut, a select all, or the like.

Even though the gesture input related to a user motion to the electronic device 100 is exclusively illustrated in the diagram, the gesture mapping table 141 may further include a gesture input related to a movement of the electronic device 100.

An editing function which is based on a gesture input in an editable state will be explained later. If the specific gesture input is sensed in the editable state, the electronic device 100 may perform an editing function corresponding to the gesture input. Furthermore, as far as the input which indicates to end the editable state is not received, the electronic device 100 may continuously perform the editing function based on the gesture input.

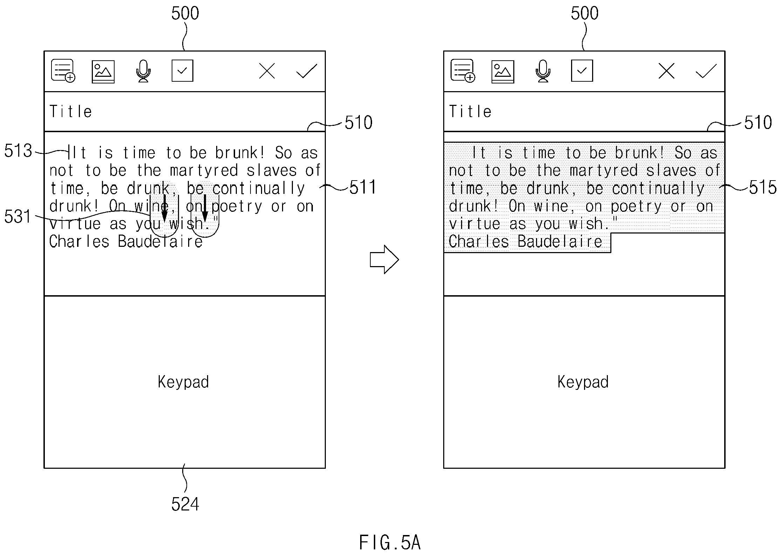

FIG. 5A is a diagram illustrating a "select all" function while editing contents based on a gesture input, according to various embodiments of the present disclosure.

Referring to FIG. 5A, the electronic device 100 may display contents and a soft input panel (SIP) on a screen 500 in a contents editable state. For example, the electronic device 100 may display contents 511, such as a text, an image, a video, an icon, a symbol, or the like, and a cursor 513 on a display area 510 and may display a soft keypad on an area 524 at the bottom of the screen 500.

If a gesture input is sensed in the editable state, the electronic device 100 may analyze the corresponding gesture input and may perform a function corresponding to the gesture input. For example, if a gesture 531 (e.g., two fingers down swipe) in which two fingers move downwardly in a state where the two fingers contact on a gesture input sensing area is performed, the electronic device 100 may select all the contents 511 displayed on the contents display area 510 as an editing target 515. In this case, the electronic device 100 may use different colors for a background to differentiate states before and after the contents 511 have been selected as the editing target 515. Furthermore, the electronic device 100 may display information, such as a type, content, or the like of the contents 511 selected as the editing target 515 on an area of the screen 500 or may output the information audibly, for example, by voice. For example, the electronic device 100 may display a text, such as "All selected" on an area of the bottom of the screen 500 or may output the text audibly, for example, by voice.

According to various embodiments of the present disclosure, if an editing function is performed in an editable state, the electronic device 100 may provide information related to the editing function to a user such that a related editing function is performed. For example, if at least a portion of the contents 511 is selected as the editing target 515 in the editable state, the electronic device 100 may display information, such as a type, a description, or the like of a related editing function, on an area of the screen 500 or may output the information audibly, for example, by voice. According to an embodiment of the present disclosure, the electronic device 100 may designate an editing function, such as a copy, a cut, or the like of the editing target 515 as the related editing function and may provide information (e.g., a type, a description, or the like of the related editing function) related to the corresponding editing function to the user. Accordingly, the user may perform a gesture input following a guide without remembering the gesture about the editing function.

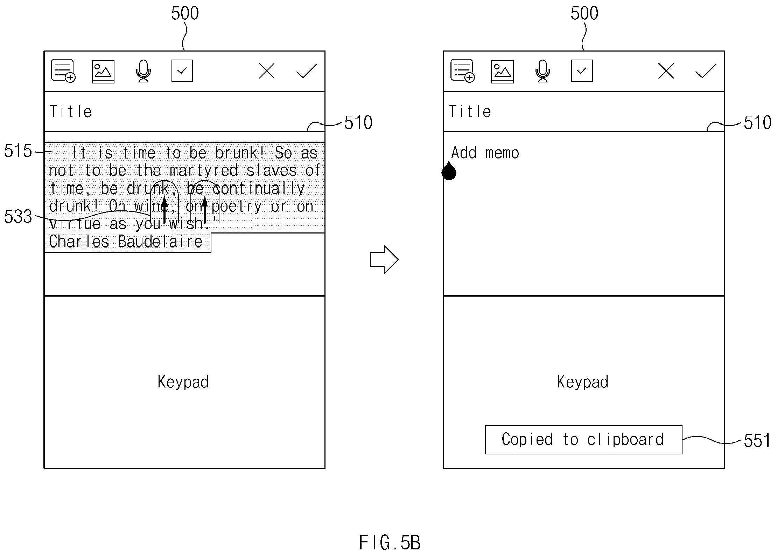

FIG. 5B is a diagram illustrating a cut function while editing contents based on a gesture input, according to various embodiments of the present disclosure.

Referring to FIG. 5B, if a gesture input is sensed in a state where at least a portion of contents 511 is selected as an editing target 515, the electronic device 100 may perform the corresponding editing function. If a gesture 533 (e.g., two fingers up swipe) in which two fingers move upwardly in a state where the two fingers contact on a gesture input sensing area is performed, the electronic device 100 may perform a cut function about the editing target 515. In this case, the electronic device 100 may delete at least a portion of the contents 511 selected as the editing target 515 on a display area 510. Furthermore, the electronic device 100 may display information, such as a type, a description, or the like of the editing function, on an area of the screen 500 or may output the information audibly, for example, by voice. For example, the electronic device 100 may display a text, such as "Cut, from It to Baudelaire", on an area of the bottom of the screen 500 or may output the text audibly, for example, by voice. Alternatively, the electronic device 100 may display information, which a user needs to know with regard to the corresponding editing function, on the area of the bottom of the screen 500 or may output the information audibly, for example, by voice. For example, the electronic device 100 may output information (e.g., the information that the cut contents is stored in a clipboard) which the user needs to know with regard to the cut function. In FIG. 5B, an embodiment of the present disclosure is exemplified as a text, such as "Copied to clipboard", is displayed in the form of a pop-up object 551.

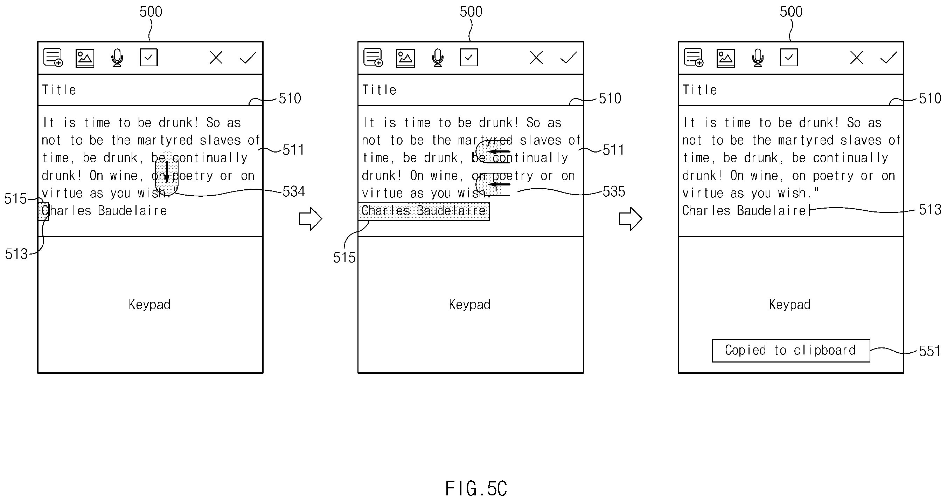

FIG. 5C is a diagram illustrating a copy function while editing contents based on a gesture input, according to various embodiments of the present disclosure.

Referring to FIG. 5C, if a gesture input is sensed in the editable state, the electronic device 100 may select at least a portion of contents 511 as an editing target 515 based on a location of a cursor 513. If a gesture (e.g., one finger up swipe) in which one finger moves upwardly in a state where the one finger contacts on a gesture input sensing area is performed, the electronic device 100 may move the cursor 513 from a current location of the contents 511 to a previous location and may include at least a portion of the contents 511 to the editing target 515. Likewise, if a swipe gesture 534 (e.g., one finger down swipe) in which one finger moves downwardly in a state where the one finger contacts on the gesture input sensing area is performed, the electronic device 100 may move the cursor 513 from a current location of the contents 511 to next location and may include at least a portion of the contents 511 to the editing target 515. For example, as illustrated in the leftmost diagram of FIG. 5C, if the one finger down swipe gesture 534 is sensed, the electronic device 100 may move the cursor 513 from the indicated current location about the contents 511 to a next location and may include the contents (e.g., the text "C") of the corresponding location in the editing target 515. Furthermore, the function which selects the editing target may be continuously performed several times. The middle diagram of FIG. 5C shows a state that the electronic device 100 selects a text, for example, "Charles Baudelaire", as an editing target 515 through the method described above.

If a gesture input is sensed in the state where the editing target 515 is selected, the electronic device 100 may perform a function corresponding to the corresponding gesture input based on the cursor 513. For example, if a gesture 535 (e.g., two fingers left swipe) in which two fingers move left in a state where the two fingers contact on the gesture input sensing area is performed, the electronic device 100 may copy an editing target 515. For example, the electronic device 100 may store the editing target 515 in a temporary storage space (e.g., a clipboard). In this case, the electronic device 100 may release the selection of the editing target 515 with the completion of the editing function (e.g., a copy function) about the editing target 515. For example, the electronic device 100 may exclude at least a portion of the contents 511 selected as the editing target 515 from the editing target 515 and may use different colors for a background to differentiate the excluded state. Furthermore, the electronic device 100 may display information related to the corresponding editing function on an area of the display area 510 or may output the information audibly, for example, by voice. For example, the electronic device 100 may display a text, such as "Copy, from Charles to Baudelaire", corresponding to information (e.g., a name of the copy function or information about the copy target) related to the copy function, in the pop-up object 551. Furthermore, the electronic device 100 may output information (e.g., information that the copied contents are stored in the clipboard) which the user needs to know with regard to the copy function, with a pop-up object 551 which includes a text, such as "Copied to clipboard", or may output the information audibly, for example, by voice.

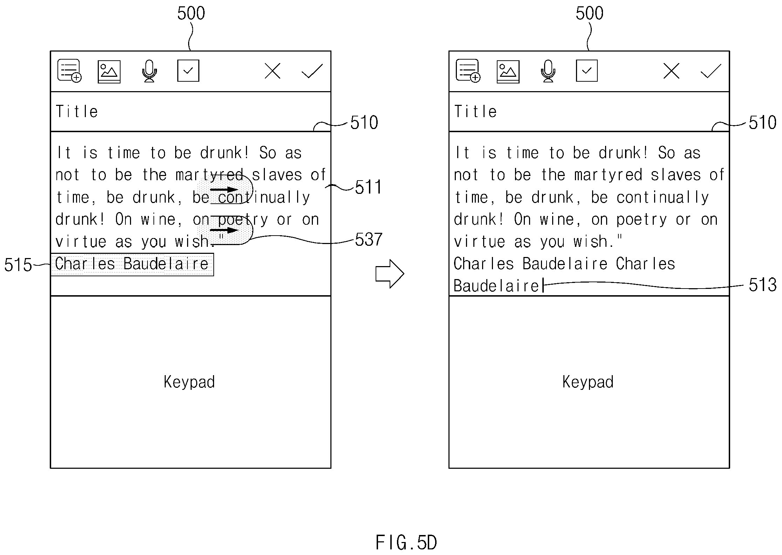

FIG. 5D is a diagram illustrating a copy function while editing contents based on a gesture input, according to various embodiments of the present disclosure.

Referring to FIG. 5D, if a gesture input is sensed in the state where at least of a portion of a contents 511 is copied into a clipboard, the electronic device 100 may perform a corresponding editing function based on a cursor 513. For example, if a gesture (e.g., two fingers right swipe) 537 in which two fingers move right in a state where the two fingers contact on the gesture input sensing area is performed, the electronic device 100 may paste at least a portion of the contents 511 stored in the clipboard starting from the location of the cursor 513. In this regard, the electronic device 100 may display information about the corresponding editing function on an area of the screen 500 or may output the information audibly, for example, by voice.

According to various embodiments of the present disclosure, in the case where information related to an editing function is displayed on an area of the display area 510 or is outputted audibly, for example, by voice, the electronic device 100 may include a type, content, or the like of the contents 511 selected as the editing target 515 into the output information and may include a type, a description, or the like of the corresponding editing function into the output information. According to an embodiment of the present disclosure, in the case where the output information includes content of the contents 511, the electronic device 100 may process differently based on a type of the contents 511. For example, in the case where the contents 511 are a text, the electronic device 100 may compose the output information so as to include a word indicating the editing function, such as a selection, a copy, a paste, a cut, or the like, as well as a first syllable (or word) and a last syllable (or word) of the text.

According to various embodiments of the present disclosure, the electronic device 100 may provide a separate tutorial to guide the user or may provide a guide in the form of a pad for practicing a gesture input such that the user performs the gesture input in such a manner as is defined in the gesture mapping table 141.

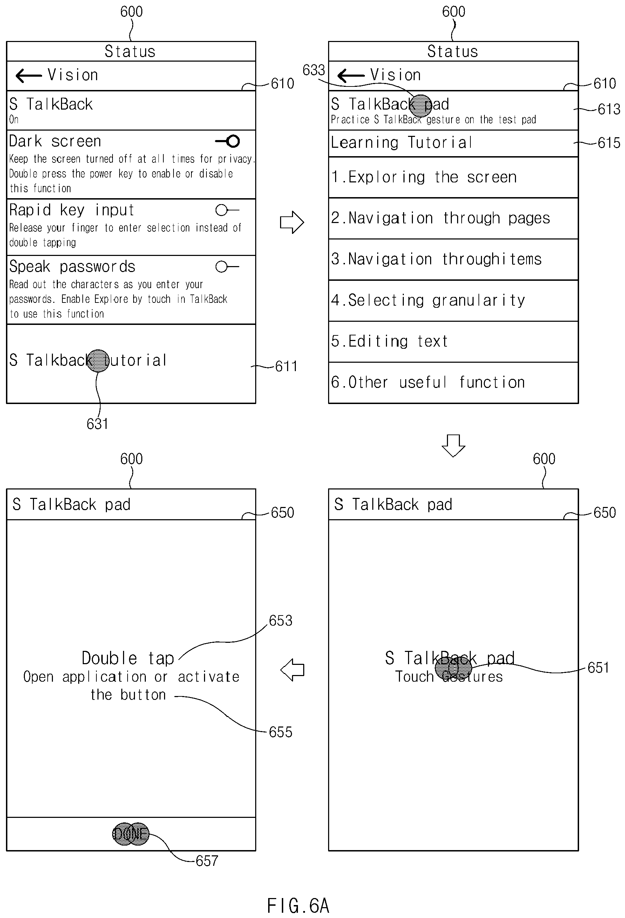

FIG. 6A shows an example in which a gesture input test pad is used, according to various embodiments of the present disclosure.

Referring to FIG. 6A, the electronic device 100 may display a configuration information list 610, which includes a configuration of information, supplementary functions or the like related to the gesture input as items, on a screen 600. The electronic device 100 may configure the configuration information list 610 so as to include an item 611 which is used to practice or guide a gesture input.

If the item 611 is selected, the electronic device 100 may delete the previous items from the configuration information list 610 and may compose and display the configuration information list 610 which is configured with sub-items of the item 611. For example, the electronic device 100 may display the configuration information list 610, in which a gesture input test pad guide 613 and a gesture input tutorial 615 are configured as items, in response to the selection of the item 611. The gesture input tutorial 615 may include information about functions defined in the gesture mapping table 141 as details.

The electronic device 100 may display a gesture input test pad 650 on the screen 600 in response to the selection of the gesture input test pad guide 613. The gesture input test pad 650 may be an example of a logical input device implemented in software and may be a type of application. If a gesture input 651 is sensed through the gesture input test pad 650, the electronic device 100 may display a symbol definition 653 (e.g., the definition 430 in FIG. 4) which may indicate a type, a form, a frequency, a direction, or the like of the gesture input 651 and information 655 about a function corresponding to the gesture input 651 on an area of the screen 600 or may output the information audibly, for example, by voice. Furthermore, the electronic device 100 may display a button 657, which indicates the end of the gesture input test pad 650, on a specific area of the screen 600. According to an embodiment of the present disclosure, if the button 657 is selected, the electronic device 100 may end the output of the gesture input test pad 650 and may return to a previous output screen, for example, a screen on which the configuration information list 610 is displayed.

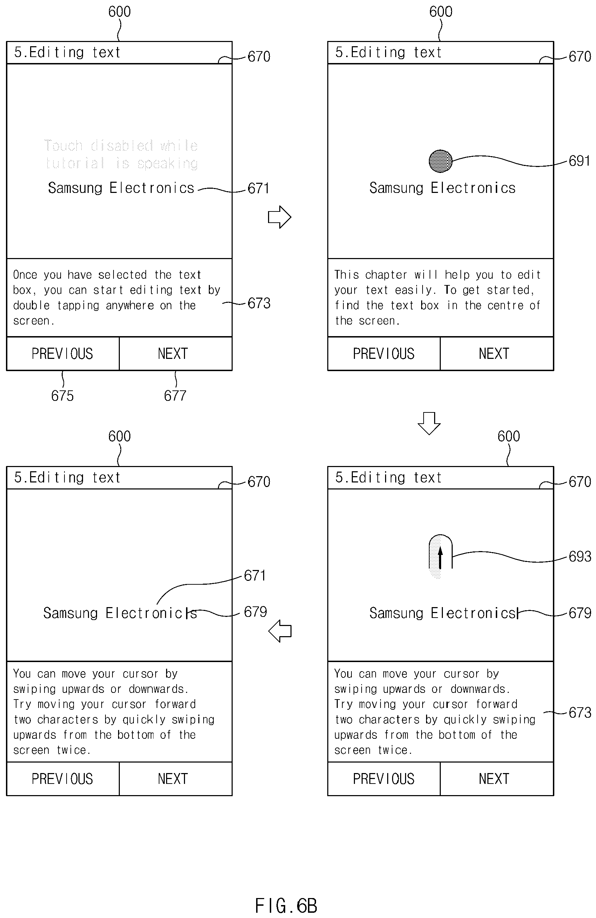

FIG. 6B shows an example in which a gesture input tutorial is used, according to various embodiments of the present disclosure.

Referring to FIG. 6B, if the gesture input tutorial 615 is selected on a screen on which the configuration information list 610 is displayed, the electronic device 100 may display a tutorial screen 670 on the screen 600. Contents 671 to be used in a tutorial may be displayed on an area of the tutorial screen 670 and the corresponding area may be used to receive a user's gesture input. Furthermore, the electronic device 100 may display an object 673 (e.g., a text, an image, or the like) which guides the user to perform an indicated gesture on an area of the tutorial screen 670. In this case, the electronic device 100 may output voice related to the indicated gesture with the display of the object 673. According to an embodiment of the present disclosure, in the state where the voice related to the indicated gesture is outputted, the electronic device 100 may process so as not to perform the corresponding function even though the gesture input is sensed. Furthermore, the electronic device 100 may display a previous button 675 and a next button 677, which are used to change the order of the tutorial to "Previous" and "Next," on an area of the tutorial screen 670.

According to an embodiment of the present disclosure, in the state where the voice output related to the indicated gesture is ended, if the user inputs a gesture input 691 following the direction, the electronic device 100 may perform a function corresponding to the gesture input 691. Furthermore, the electronic device 100 may continue the tutorial to the following sequence of the corresponding function and may change the object 673 to display information about a function associated with the following sequence. The illustrated diagram shows that the electronic device 100 starts the tutorial after the sensing of the gesture input 691.

If the tutorial is started, the electronic device 100 may guide gesture inputs, which the electronic device supports, in a specific sequence. The illustrated diagram shows a screen in which the electronic device 100 performs a function corresponding to the corresponding gesture input based on the analysis result about the gesture input inputted according to the indicated gesture, for example, a function of moving a cursor 679 to a specific location of the contents 671. If a gesture (e.g., one finger up swipe) 693 in which one finger moves upwardly in a state where the one finger contacts on a gesture input sensing area is performed, the electronic device 100 may move the cursor 679 from a current location of the contents 671 to a previous location. In this regard, the electronic device 100 may change the object 673 to display information related to a function which is indicated as the following sequence in the sequence of the tutorial. Furthermore, the electronic device 100 may output information corresponding to the object 673 audibly, for example, by voice.

According to various embodiments of the present disclosure, if an item among the details of the gesture input tutorial 615 is selected on a screen on which the configuration information list 610 is displayed, the electronic device 100 may guide the gesture input corresponding to the item. In this case, the electronic device 100 may return to a previous screen after guiding the gesture input corresponding to the item or may guide a gesture input corresponding to the previous or next sequence in the tutorial sequence based on the item.

According to various embodiments of the present disclosure, if a gesture input is sensed in satisfying a condition, the electronic device 100 may display a configuration information list 610 on the screen 600. For example, in the case where the electronic device 100 is not in an editable state, if a gesture input is sensed to display the configuration information list 610, the electronic device 100 may perform the corresponding function. Furthermore, if a gesture input is sensed at a point in time when a condition is satisfied, the electronic device 100 may perform control to execute the gesture input test pad guide 613 or the gesture input tutorial 615.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific integrated circuit (ASIC) chip, a field-programmable gate array (FPGA), and a programmable-logic device for performing some operations, which are known or will be developed.

At least a portion of an apparatus (e.g., modules or functions thereof) or a method (e.g., operations) according to various embodiments of the present disclosure may be, for example, implemented by instructions stored in a computer-readable storage media in the form of a program module.

A module or a program module according to various embodiments of the present disclosure may include at least one of the above elements, or a portion of the above elements may be omitted, or additional other elements may be further included. Operations performed by a module, a program module, or other elements according to various embodiments of the present disclosure may be executed sequentially, in parallel, repeatedly, or in a heuristic method. Also, a portion of operations may be executed in different sequences, omitted, or other operations may be added.

According to various embodiments of the present disclosure, a user input procedure may be simplified by processing such that an editing function with the complex procedure and configuration is executed in response to a specific gesture input when contents are edited based on a gesture input.

Furthermore, according to various embodiments of the present disclosure, the ease of a gesture input may be improved by expanding a gesture input sensing area.

Furthermore, according to various embodiments of the present disclosure, the availability of a gesture input may be increased by providing feedback information corresponding to an editing function to a user.

While the present disclosure has been shown and described with reference to various embodiments thereof, it will be understood by those skilled in the art that various changes in form and details may be made therein without departing from the spirit and scope of the present disclosure as defined by the appended claims and their equivalents.
Further embodiments are disclosed in the below clauses:
Clause 1. An electronic device comprising:
   a memory configured to store an application;
   a processor configured to execute the application and to control an editable state of at least one of contents related to the application; and
   a touch screen display configured to sense at least one gesture input related to editing of the contents,
   wherein the processor is configured to enter the editable state corresponding to a first gesture input if the first gesture input is obtained in a partial area of the touch screen display, to expand an input area for a second gesture input, which is mapped to select at least one type among types of editing function, to an area of the touch screen display on which a gesture input is acceptable, and to perform an editing function corresponding to the second gesture input if the second gesture input is obtained on an area on which the gesture input is acceptable.
Clause 2. The electronic device of clause 1, wherein the memory stores information related to the gesture input which is mapped on information related to the editing function.
Clause 3. The electronic device of clause 1, wherein the contents comprise at least one of a text, an image, and an attached file.
Clause 4. The electronic device of clause 1, wherein the processor obtains the gesture input from an external electronic device which is connected to the electronic device through a communication interface.
Clause 5. The electronic device of clause 1, wherein the processor displays information related to the editing function on an area of the touch screen display or outputs the information related to the editing function through a voice output device.
Clause 6. The electronic device of clause 1, wherein the processor displays an object on an area of the touch screen display or outputs voice information corresponding to the object through a voice output device, the object guiding a gesture input corresponding to a related function such that the related function of the editing function is performed at a time when the editing function is completed or in a time interval.
Clause 7. The electronic device of clause 1, wherein the processor selects at least a portion of the contents as an editing target corresponding to the second gesture input and performs a cut function, a copy function, or a paste function with respect to the editing target corresponding to a third gesture input.
Clause 8. The electronic device of clause 7, wherein, if the second gesture input is obtained in a state where an input which explicitly indicates an end of the editable state is not obtained, the processor controls so as not to end the editable state until the third gesture input is obtained.
Clause 9. The electronic device of clause 1, wherein, if a specific gesture input is obtained or an item is selected on an information configuration screen related to the gesture input, the processor executes a program which supports to practice a gesture corresponding to the gesture input.
Clause 10. The electronic device of clause 1, wherein, if a specific gesture input is obtained or an item is selected on an information configuration screen related to the gesture input, the processor executes a program which supports to explain at least one of information or a gesture corresponding to the gesture input which is supportable.
Clause 11. A method for processing a gesture input, related to editing at least one of contents, in an electronic device, the method comprising:
   obtaining a first gesture input related to editing the contents through a touch screen display included in the electronic device;
   entering an editable state of the contents corresponding to the first gesture input;
   expanding an input area for a second gesture input, which is mapped to select at least one type among types of editing function to an area of the touch screen display on which a gesture input is acceptable;
   obtaining the second gesture input on an area on which the gesture input is acceptable; and
   performing an editing function corresponding to the second gesture input.
Clause 12. The method of clause 11, wherein at least one of the obtaining of the first gesture input and the obtaining of the second gesture input comprises:
   obtaining the gesture input from an external electronic device connected to the electronic device through a communication interface.
Clause 13. The method of clause 11, wherein the performing of the editing function further comprises at least one of displaying information related to the editing function on an area of the display and outputting the information related to the editing function through a voice output device.
Clause 14. The method of clause 11, wherein the performing of the editing function further comprises at least one of displaying an object on an area of the display and outputting voice information corresponding to the object through a voice output device, the object guiding a gesture input corresponding to a related function such that the related function of the editing function is performed in completing the performance of the editing function or in a time interval.
Clause 15. The method of clause 11, wherein the performing of the editing function comprises selecting at least a portion of the contents as an editing target corresponding to the second gesture input and performing a function, such as a cut function, a copy function, or a paste function about the editing target corresponding to a third gesture input,
   wherein the selecting of the at least a portion of the contents further comprises performing control so as not to end the editable state until the third gesture input is obtained, if the second gesture input is obtained in a state where an input which explicitly indicates an end of the editable state is not obtained.

## Claims

1. An electronic device comprising:
a memory storing an application;
a touch screen display; and
at least one processor configured to:
execute the application;
display, on the touch screen display, a content related to the application;
obtain, via a first input area of the touch screen display, a first gesture input, wherein the first gesture input is one of a plurality of gesture inputs and each of the plurality of gesture inputs is mapped to one of a plurality of editing functions;
enter an editable state of the content, in response to obtaining the first gesture input;
obtain, in the editable state, via a second input area of the touch screen display, a second gesture input which is one of the plurality of gesture inputs, wherein the second input area expands from the first input area and is larger than the first input area; and
perform an editing function mapped to the second gesture input from among the plurality of editing functions,
wherein the at least one processor is further configured to terminate the editable state of the content, in response to obtaining the first gesture input again, after entering the editable state of the content.

2. The electronic device of claim 1, wherein the memory stores information on the plurality of gesture inputs and information on the plurality of editing functions.

3. The electronic device of claim 1, wherein the content comprises at least one of a text, an image, or an attached file.

4. The electronic device of claim 1, wherein the at least one processor is further configured to display information related to the editing function mapped to the second gesture input on the touch screen display or outputs the information related to the editing function mapped to the second gesture input through a voice output device.

5. The electronic device of claim 1, wherein the at least one processor is further configured to display an object on an area of the touch screen display or outputs voice information corresponding to the object through a voice output device, the object guiding a gesture input corresponding to a related function such that the related function of the editing function is performed at a time when the editing function is completed or in a time interval.

6. The electronic device of claim 1, wherein the at least one processor is further configured to select at least a portion of the content as an editing target in response to the second gesture input and to perform a cut function, a copy function, or a paste function with respect to the editing target in response to a third gesture input.

7. The electronic device of claim 6, wherein, when the
second gesture input is obtained in a state where an input which explicitly indicates an end of the editable state is not obtained, the at least one processor is further configured to control so as not to end the editable state until the third gesture input is obtained.

8. The electronic device of claim 1, wherein, when a specific gesture input is obtained or an item is selected on an information configuration screen related to the specific gesture input, the at least one processor is further configured to execute a program that supports practicing a gesture corresponding to the specific gesture input.

9. The electronic device of claim 1, wherein, when a specific gesture input is obtained or an item is selected on an information configuration screen related to the specific gesture input, the at least one processor is further configured to execute a program that explains at least one of information or a gesture corresponding to the specific gesture input that is supportable.

10. A method for editing a content in an electronic device, the method comprising:
executing an application stored in a memory of the electronic device;
displaying, on a touch screen display of the electronic device, the content related to the application;
obtaining, via a first input area of the touch screen display, a first gesture input, wherein the first gesture input is one of a plurality of gesture inputs and each of the plurality of gesture inputs is mapped to one of a plurality of editing functions;
entering an editable state of the content, in response to obtaining the first gesture input;
in the editable state, obtaining, via a second input area of the touch screen display, a second gesture input which is one of the plurality of gesture inputs, wherein the second input area expands from the first input area and is larger than the first input area;
performing an editing function mapped to the second gesture input from among the plurality of editing functions; and
terminating the editable state of the content, in response to obtaining the first gesture input again, after entering the editable state of the content.

11. The method of claim 10, further comprising:
storing information on the plurality of gesture inputs and information on the plurality of editing functions on the memory.

12. The method of claim 10, further comprising:
displaying information related to the editing function mapped to the second gesture input on the touch screen display or outputting the information related to the editing function mapped to the second gesture input through a voice output device.

13. The method of claim 10, further comprising:
displaying an object on an area of the touch screen display or outputting voice information corresponding to the object through a voice output device, the object guiding a gesture input corresponding to a related function such that the related function of the editing function is performed in completing the performance of the editing function or in a time interval.

14. The method of claim 10, further comprising:
selecting at least a portion of the content as an editing target in response to the second gesture input; and
performing a cut function, a copy function, or a paste function with respect to the editing target in response to a third gesture input.

15. The method of claim 14, further comprising:
performing control so as not to end the editable state until the third gesture input is obtained, when the second gesture input is obtained in a state where an input which explicitly indicates an end of the editable state is not obtained.
